# EUROPEAN PATENT SPECIFICATION

(11) **EP 2 246 229 B1**
(45) Date of publication and mention of the grant of the patent: **19.06.2013**
(21) Application number: 09158911.9
(22) Date of filing: 28.04.2009
(51) Int. Cl.: B60T 17/04

(54) **Integration system of test ports and/or compressed air filling ports in vehicle accessories, especially of industrial or commercial vehicles**
Integrationssystem für Prüfanschlüsse und/oder Druckluftbefüllungsanschlüsse bei Fahrzeugzubehör, speziell von Industrie- oder Nutzfahrzeugen
Système d'intégration de ports de test et/ou portes de remplissage d'air comprimé dans des accessoires de véhicule, spécialement de véhicules industriels ou commerciaux

(43) Date of publication of application: 03.11.2010
(73) Proprietor: IVECO MAGIRUS AG, D-89079 Ulm (DE)
(72) Inventor: Glass, Oliver, 89077, ULM (DE)
(74) Representative: Borsano, Corrado

(56) References cited:
- EP-A- 0 003 311
- WO-A-2009/041865
- US-A- 5 503 011
- US-A- 5 709 436
- US-A- 6 079 260

## Description

### Application field of the invention

The present invention refers to an integration system of test ports and compressed air filling ports in vehicle accessories, especially of industrial or commercial vehicles.

### Description of the prior art

Industrial or commercial vehicles are equipped with appropriate ports which are accessible from outside for test operations or for filling pneumatic circuits, especially compressed air circuits. These ports, for example valves, are installed on projecting shelves or brackets which are welded or screwed on vehicle parts, such as for example cabin, chassis, so that they can be easily accessible from outside for usually manual operations.

**An example of a known integration system of test ports and/or compressed air filing ports in a vehicle is disclosed in** EP0003311**.**

These solutions known in the art have a number of drawbacks: high cost of the additional materials (shelves, screws.....) and of the assembling and stock management time; heavy and bulky structures; higher risk to be damage by atmospheric phenomena, such as being corroded.

### Summary of the invention

Therefore the aim of the present invention is to overcome all the drawbacks mentioned above and to obtain an integration system of test ports and/or compressed air filling ports in vehicle accessories, especially of industrial or commercial vehicles, which avoids to use intermediate additional shelves or brackets.

The subject of the present invention is an integration system of test ports and/or compressed air filling ports, especially of industrial or commercial vehicles wherein the ports are installed directly on already present vehicle accessories, such as for example the fenders or the lateral panels of the cabin or of the body.

The subject of the present invention is an integration system of test ports and/or compressed air filling ports, especially of industrial or commercial vehicles, comprising, according to claim 1.

The subject of the present invention is in particular an integration system of test ports and/or compressed air filling ports in one or more accessories of a vehicle, especially of an industrial or commercial vehicle, as described more fully in the claims, which are an integral part of the present description.

### Brief description of the Figures

Further purposes and advantages of the present invention will become clear from the following detailed description of a preferred embodiment (and relative alternative embodiments) and the drawings that are attached hereto, which are merely illustrative and not limitative, in which:
figures 1A and 1B show ports directly installed on a fender by claws or clips, respectively in a lateral view and in a partial transparency isometric view;
figures 2A, 2B and 2C show ports directly installed on a fender by screwing, respectively in a lateral view and in an external and internal isometric view in partial transparency;
figures 3A and 3B show driving and covering systems inside the fender for pipes and cable which are connected to the ports;
figures 4A and 4B show external covering systems for the ports.

In the drawings the same reference numbers and letters are used to identify the same elements or components.

### Detailed description of preferred embodiments of the invention

Figures show non limitative examples of installations of test and filling ports directly on the fender of a vehicle.

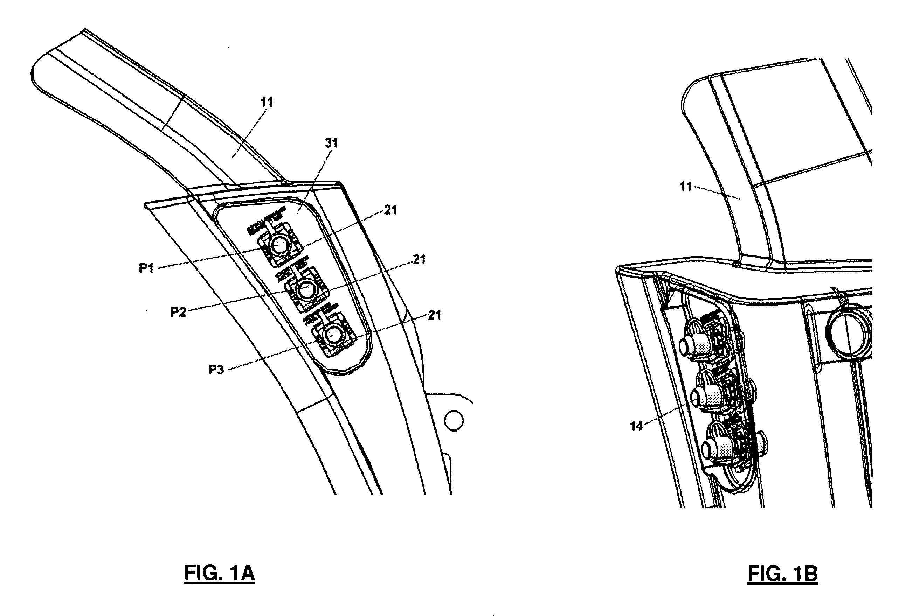

In a first alternative embodiment, shown in figures 1A and 1B, the ports P1, P2, P3 are directly installed on a fender 11 by means of claws or clips 21. On the installation points the fender has appropriate holes where the claws are fixed, and the relative area of the fender may be reinforced by the application of a plate 13, or by folding or thickening the fender itself. The ports preferably have appropriate removable protection caps or coverings 14. Ports are easily accessible from the outside for the application of appropriate tools which can be inserted in the ports themselves.

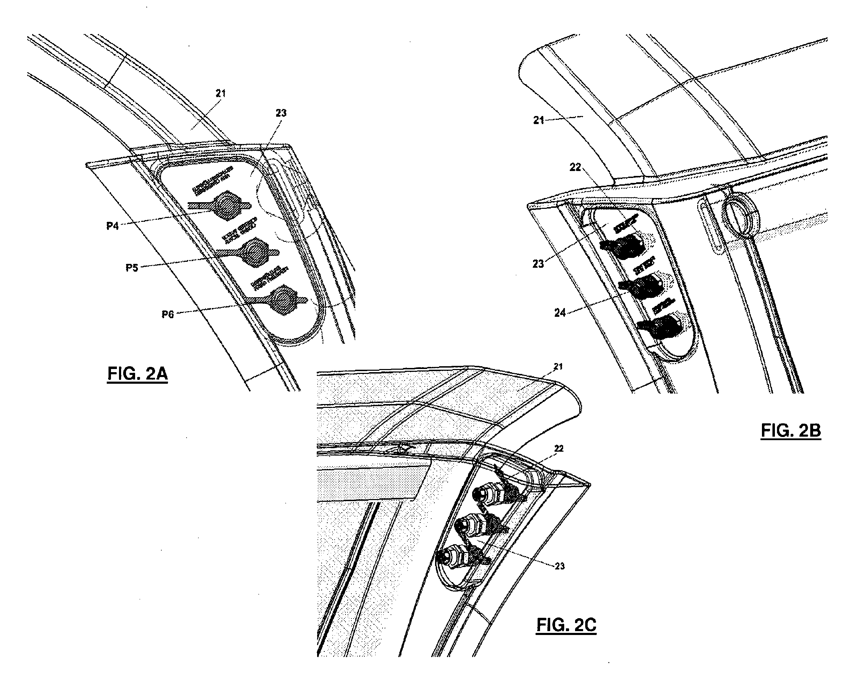

In a second alternative embodiment, shown in figures 2A, 2B, 2C the ports P4, P5, P6 are directly installed on a fender 21 by screwing. Also in this case, on the installation points the fender has appropriate holes where ports are screwed and their position is maintained with as many nuts 22, and the relative area of the fender may be reinforced by the application of a plate 23, or by folding or thickening of the fender itself. Also in this case, the ports preferably have appropriate removable protection caps and coverings 24, and are easily accessible from outside for the application of appropriate tools which can be inserted in the ports themselves.

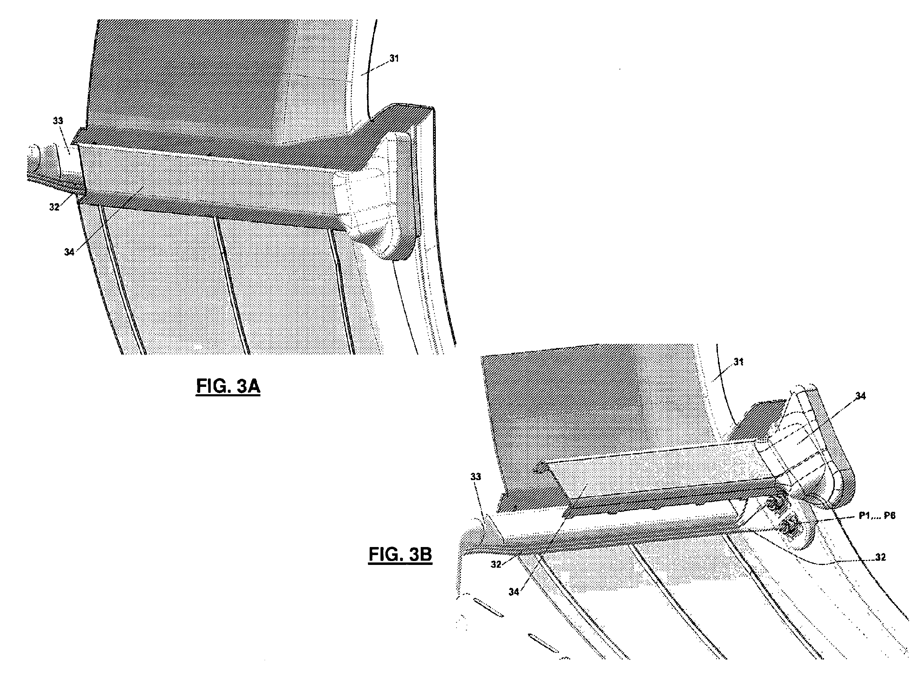

Figures 3A and 3B show driving and covering systems inside the fender 31 for pipes and cable which are connected to the ports 3A, 3B...

Inside the fender, the ports are connected to their respective pneumatic ducts 32, which may be rigid or flexible, and which run along the internal edge of the fender, ending with their respective user devices inside the vehicle and not visible in the figure. The ducts 32 are preferably covered by plastic protection sheaths 33, and an additional plastic protection covering 34 may be present in order to cover both the pipes and the housing of the ports from the internal part of the fender, in order to protect the system against objects lifted and thrown by the moving tyres.

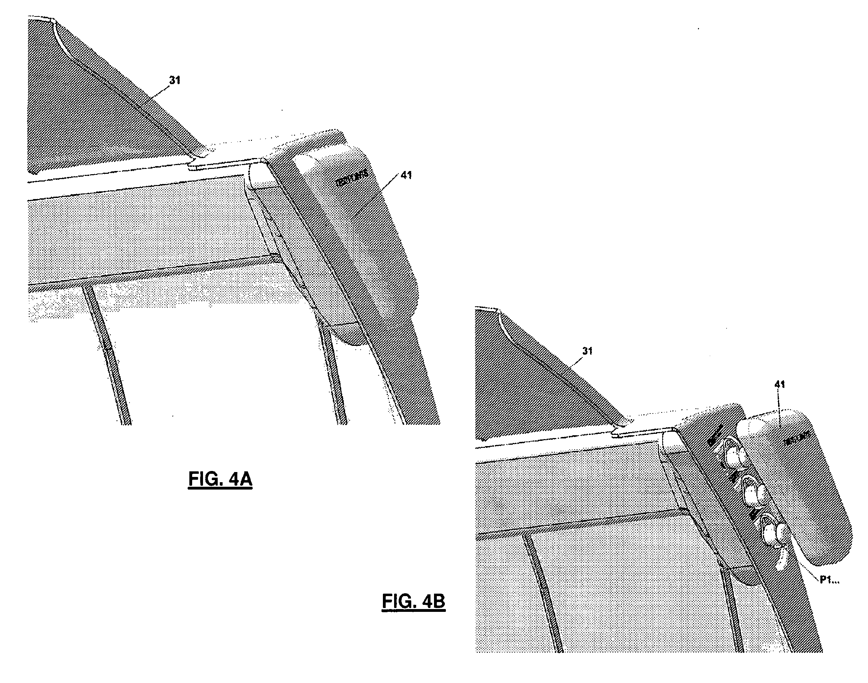

Figures 4A and 4B show plastic external covering systems 41 for protecting the ports. The covering 41 may be shaped by moulding and then positioned by means of appropriate claws or clips.

It will be apparent to the person skilled in the art that other alternative and equivalent embodiments of the invention can be conceived and reduced to practice without departing from the scope of the invention.
For example, the ports may be placed not only on the fenders, but also on other vehicle accessories, such as for example parts of the chassis, of the battery carrier box, on additional elements on air tanks or on diesel fuel tank.

The advantages deriving from the use of this invention are evident, and the invention solves the above mentioned drawbacks of the solutions known in the art.

A decrease of the cost of the additional materials (shelves, screws. ....) and of the assembling and stock management time and costs is obtained; the weight of the structures and the space occupied is reduced; the risk to be damaged by atmospheric phenomena, such as being corroded, is reduced.

From the description set forth above it will be possible for the person skilled in the art to embody the invention with no need of describing further construction details.

## Claims

1. Integration system of test ports and/or compressed air filling ports in vehicle accessories, especially of industrial or commercial vehicles, wherein said integration system comprises one or more test ports and/or compressed air filling ports (P1 , ...... P6) directly installed on one or more accessories selected from the group consisting of a fender, parts of the chassis, battery carrier box and additional elements on air tank or on diesel fuel tank, said one or more test ports and/or compressed air filling ports facing the outside of the vehicle and being directly connected to their respective internal pipes.

2. Integration system as in claim 1, wherein said direct connection system comprises claws or clips (21) for fixing said one or more test and/or filling port (P1, ...... P6) directly to the accessory.

3. Integration system as in claim 1, wherein said direct connection system comprises a screwing system for fixing said one or more test and/or filling port (P1 , ...... P6) directly to the accessory.

4. Integration system as in claim 1, comprising holes in said accessories for housing the ports.

5. Integration system as in claim 1, wherein the area of the accessory where said ports are present is reinforced by the application of a plate (13), or by folding or thickening of said accessory.

6. Integration system as in claim 1, wherein said internal pipes (32) are covered by protection sheaths (33).

7. Integration system as in claim 1, comprising a protection covering (34) suitable for covering both the pipes and the housing of the ports in the internal part of the accessory.

8. Integration system as in claim 1, comprising an external covering system (41) for protecting the ports.

## Patentansprüche

1. Integrationssystem von Prüfdurchlässen und/oder Druckluftfülldurchlässen in Fahrzeugzubehöreinrichtungen, insbesondere von gewerblichen Fahrzeugen oder Nutzfahrzeugen, wobei das Integrationssystem einen oder mehrere Prüfdurchlässe und/oder Druckluftfülldurchlässe (P1, ...... P6) umfasst, die direkt an einer oder mehreren Zubehöreinrichtungen installiert sind, die aus der Gruppe gewählt sind, die aus einem Kotflügel, Teilen des Fahrgestells, einem Batterieträgerkasten und zusätzlichen Elementen an einem Lufttank oder an einem Dieselkraftstofftank besteht, wobei der eine oder die mehreren Prüfdurchlässe und/oder Druckluftfülldurchlässe zu der Außenseite des Fahrzeugs weisen und direkt mit ihren jeweiligen Innenrohren verbunden sind.

2. Integrationssystem nach Anspruch 1,
wobei das Direktverbindungssystem Klauen oder Klemmen (21) zum Fixieren des einen oder der mehreren Prüf- und/oder Fülldurchlässe (P1, ...... P6) direkt an der Zubehöreinrichtung umfasst.

3. Integrationssystem nach Anspruch 1,
wobei das Direktverbindungssystem ein Schraubsystem zum Fixieren des einen oder der mehreren Prüf- und/oder Fülldurchlässe (P1, ...... P6) direkt an der Zubehöreinrichtung umfasst.

4. Integrationssystem nach Anspruch 1,
mit Löchern in den Zubehöreinrichtungen zum Aufnehmen der Durchlässe.

5. Integrationssystem nach Anspruch 1,
wobei der Bereich der Zubehöreinrichtung, an welchem die Durchlässe vorhanden sind, durch die Aufbringung einer Platte (13) oder durch Falzen oder Verdicken der Zubehöreinrichtung verstärkt ist.

6. Integrationssystem nach Anspruch 1,
wobei die Innenrohre (32) durch Schutzumhüllungen (33) bedeckt sind.

7. Integrationssystem nach Anspruch 1,
mit einer Schutzabdeckung (34), die zum Abdecken sowohl der Rohre als auch des Gehäuses der Durchlässe in dem Innenteil der Zubehöreinrichtung geeignet ist.

8. Integrationssystem nach Anspruch 1,
mit einem äußeren Abdecksystem (41) zum Schützen der Durchlässe.

## Revendications

1. Système d'intégration d'orifices d'essai et/ou d'orifices de remplissage d'air comprimé dans des accessoires de véhicule, spécialement des véhicules industriels ou commerciaux, dans lequel ledit système d'intégration comprend un ou plusieurs orifices d'essai et/ou orifices de remplissage d'air comprimé (P1, ... P6) directement installés sur un ou plusieurs accessoires choisis dans le groupe constitué par une aile, des parties du châssis, un compartiment porte-batterie et des éléments additionnels sur un réservoir d'air ou sur un réservoir de carburant diesel, lesdits un ou plusieurs orifices d'essai et/ou orifices de remplissage d'air comprimé faisant face à l'extérieur du véhicule et étant directement raccordés à leurs tuyaux internes respectifs.

2. Système d'intégration selon la revendication 1, dans lequel ledit système de raccordement direct comprend des griffes ou des pinces (21) permettant de fixer lesdits un ou plusieurs orifices d'essai et/ou orifices de remplissage (P1, ... P6) directement à l'accessoire.

3. Système d'intégration selon la revendication 1, dans lequel ledit système de raccordement direct comprend un système de vissage permettant de fixer lesdits un ou plusieurs orifices d'essai et/ou de remplissage (P1, ... P6) directement à l'accessoire.

4. Système d'intégration selon la revendication 1, comprenant des trous dans lesdits accessoires permettant de loger les orifices.

5. Système d'intégration selon la revendication 1, dans lequel la zone de l'accessoire dans laquelle lesdits orifices sont présents est renforcée par l'application d'une plaque (13), ou par pliage ou épaississement dudit accessoire.

6. Système d'intégration selon la revendication 1, dans lequel lesdits tuyaux internes (32) sont couverts par des gaines de protection (33).

7. Système d'intégration selon la revendication 1, comprenant une couverture de protection (34) convenant pour couvrir à la fois les tuyaux et le logement des orifices dans la partie interne de l'accessoire.

8. Système d'intégration selon la revendication 1, comprenant un système de couverture externe (41) permettant de protéger les orifices.
